# EUROPEAN PATENT APPLICATION

(11) **EP 2 161 068 A2**
(43) Date of publication of application: **10.03.2010**
(21) Application number: 08169066.1
(22) Date of filing: 13.11.2008
(51) Int. Cl.: B01D 53/14, B01D 53/18

(54) **Method and device for methane enrichment of biogas using purified municipal waste**

(30) Priority: 08.09.2008 PL 38604808
(71) Applicant: Politechnika Lubelska, 20-219 Lublin (PL)
(72) Inventor: Pawlowski, Lucjan, 20-027, Lublin (PL); Pawlowska, Malgorzata, 20-027, Lublin (PL); Dadej, Witold, 20-861, Lublin (PL)
(74) Representative: Kaminski, Piotr

(57) **Abstract**

A method and device for enrichment of biogas with methane with the use of purified municipal wastes is characterised in that the purified sewage is mixed under pressure with the biogas and transmitted to separator in order to separate methane enriched biogas from sewage containing dissolved carbon dioxide.

## Description

The present invention relates to a method and device for enrichment of methane from purified municipal wastes.

In municipal waste treatment plants sewage sludge is often subjected to methane fermentation which allows for production of biogas. On average from 1 kg of dry mass contained in sewage sludge one can obtain between 0,85 and 1 m³ of biogas of methane content between 63 and 70 %. Such gas can be utilised for energy purposes, however carbon dioxide contained in it in the amounts between 30 and 37% lowers its energy value. It is therefore beneficial to remove carbon dioxide.

From Chinese patent CN 101 130 787 known is a method for removal of H₂S and CO₂ from biogas by introduction of these gases into a solution containing microorganisms assimilating H₂S and CO₂. As a consequence, the purified biogas is enriched with methane. The drawback of this method is a relatively low efficiency of the process as calculated per 1 m³ of used solution - it thus requires use of large volumes of the solution.

In another Chinese patent CN 101 108 988 biogas is contacted with MEDA solution, in which H₂S and CO₂ as well as other impurities well dissolve. After separation from the solution biogas enriched with methane is obtained. The solution is then subjected to regeneration by use of expansion and increase of temperature to 50-60 °C.

In Japanese patent JP2007246414 a method is described in which N₂O is first removed from the gas, which is then cooled down to the temperature of -80 °C and passed through active carbon, where according to patent description, methane is absorbed. Afterwards the active carbon containing absorbed CH₄ is heated to the room temperature where pure 100% methane is released.

In still another Japanese patent JP2007237112 a method is described where CO₂ contained in biogas is solidified. The drawback of this method is that is highly energy-consuming, unless the biogas enrichment is linked to dry ice production.

Indian patent IN2002DE01142 describes a method of CO₂ removal in calcium hydroxide solution. During production of calcium oxide, from which calcium hydroxide is produced large quantities of energy are consumed to break down CaCO₃ to CaO and CO₂. This is a drawback of this method and in fact its use is not beneficial in terms of energy output.

Japanese patent JP2003230810 describes a method where CO₂ is absorbed in solvent which leads to enrichment of gaseous phase with methane. Subsequently CO₂ is removed in degasser under reduced pressure and the solvent is re-circulated for the subsequent use.

In American patent US20030062305 a method was presented in which CO₂ was removed from biogas by washing out with alkaline solution. In the solution both CO₂ and H₂S are soluble. The use of large quantities of alkalizing substance is a drawback of this method.

In work published by Journal of Membrane Science, 1999, vol. 154, p. 121-126, a method of separation of CO₂ from CH₄ with use of plastic semi-permeable membranes is presented. The report of 1991 (NYSERDA - 91 - 9), published by Stevens Institute of Technology, USA, presents a method for removal of CO₂ from biogas which involves separation on suitably prepared tubular membranes containing liquid membranes (HFCLM).

In European patent EP252169 biogas produced from agricultural waste is directed successively to two columns filled with water. In the first column H₂S is absorbed while in the second CO₂ is absorbed. Water after degassing is re-circulated in the process. Emission of toxic and offensive odour producing H₂S is a drawback of the method.

British patent GB 2190682 presents a method based on injecting the biogas into a container with water through an inlet located below the water level. Water is continuously removed from the container and at the same time fresh water in the same amount is added. Afterwards carbon dioxide is removed with water.

Other method for removal of CO₂, NH₃ and sulphur compounds is presented in East German Patent DD219953. The method involves biogas filtration on molecular sieves - porous silica gel and zeolite type CaA. The efficiency of this method is low.

The essence of the method for enrichment of biogas with methane with the use of purified municipal wastes is that the purified sewage is mixed under pressure and transmitted to separator in order to separate methane enriched biogas from sewage containing dissolved carbon dioxide.

The essence of device for enrichment of biogas with methane with the use of purified municipal wastes, comprising agitator and separating column is that it consists of cylindrical horizontal pressure agitator for biogas and purified sewage, which on one side has an inlet for biogas and purified sewage and on the other side it has an outlet with a duct, through which an agitated sewage mixture is transmitted to vertical separating column, the inlet to separating column is tangent to the level of sewage with biogas present in the column while separating column in its upper part has a duct with valve to carry off methane enriched biogas and in its lower part it has a duct with valve for reception of sewage with carbon dioxide dissolved in it.

The beneficial effect of the invention is that the carbon dioxide removal can be effected at little overpressure because of large quantities of available purified sewage. Furthermore, because the sewage containing dissolved CO₂ can be carried off directly to sewage receiver, it is not required in this method that CO₂ be separated from working solution.

An embodiment of the device according to present invention is presented on schematic drawing.

A method according to present invention involves forcing under pressure desulphurised biogas and purified municipal wastes into cylindrical horizontal agitator, where they are mixed. Subsequently the mixture is directed to the separating column in the shape of vertically positioned cylinder where separation into two phases occurs: upper one containing methane enriched biogas and lower phase - a solution containing dissolved in sewage carbon dioxide. Biogas enriched with methane is received in the upper part of the column while carbon dioxide solution in sewage is carried off from bottom part of the column to the receiver of purified sewage.

Principle of operation of the device according to present invention is the following: biogas flows by a duct 1 to compressor 2, from where it flows in a duct to cylindrical horizontal agitator 3 while purified sewage is drawn from a reservoir 4 and forced by a pump 5 into agitator 3. Obtained mixture is pumped through a duct 6 to separating column 7. The inlet for the mixture is tangent to the level of sewage 8 in separating column 7, where phasing occurs into upper part, where methane enriched biogas accumulates and lower part in which accumulates a mixture of purified sewage with carbon dioxide dissolved in it. Biogas enriched with methane is received through duct 9 with built-in valve regulating pressure in upper part of separating column 7. The mixture of purified sewage and carbon dioxide is carried off to purified sewage receiver through a duct 10 with built-in valve regulating pressure in lower part of the separating column 7.

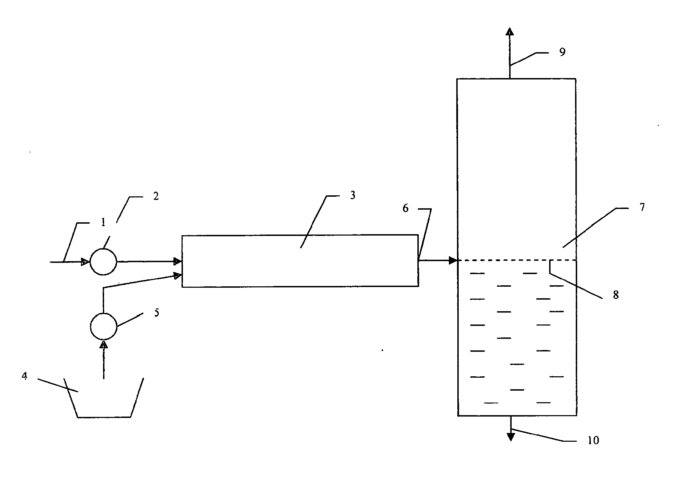

## Claims

1. A method for enrichment of biogas with methane with the use of purified municipal wastes **characterised in that** the purified sewage is mixed under pressure and transmitted to separator in order to separate methane enriched biogas from sewage containing dissolved carbon dioxide.

2. A device for enrichment of biogas with methane with the use of purified municipal wastes, comprising agitator and separating column **characterised in that** it consists of cylindrical horizontal pressure agitator (3) for biogas and purified sewage, which on one side has an inlet for biogas and purified sewage and on the other side it has an outlet with a duct (6), through which a sewage mixture agitated in agitator (3) is transmitted to vertical separating column (7) and the inlet to separating column (7) is tangent to the level (8) of sewage present in the column and column (7) in its upper part has a duct (9) with a valve to carry off methane enriched biogas and in its lower part it has a duct (10) with valve for reception of sewage with carbon dioxide dissolved in it.
